# EUROPÄISCHE PATENTSCHRIFT

(11) **EP 4 377 595 B1**
(45) Veröffentlichungstag und Bekanntmachung des Hinweises auf die Patenterteilung: **29.01.2025**
(21) Anmeldenummer: 22732192.4
(22) Anmeldetag: 08.06.2022
(51) Int. Cl.: F16L 13/14

(54) **VERBINDUNGSSTÜCK FÜR ROHRLEITUNGEN**
CONNECTOR PIECE FOR PIPELINES
RACCORD POUR TUYAUTERIE

(30) Priorität: 21.10.2021 EP 21203867
(43) Veröffentlichungstag der Anmeldung: 05.06.2024
(73) Patentinhaber: SANHA GmbH & Co. KG, 45219 Essen (DE)
(72) Erfinder: VAN DEN ABBEELE, Geert, 54655 Kyllburg (DE); HERBERG, Tom, 02964 Malschwitz (DE)
(74) Vertreter: Zenz Patentanwälte Partnerschaft mbB
(86) Internationale Anmeldenummer: PCT/EP2022/065540
(87) Internationale Veröffentlichungsnummer: WO 2023/066531

(56) Entgegenhaltungen:
- EP-A1- 3 232 109
- DE-C1- 19 509 586
- US-A- 5 405 171
- US-B2- 10 190 706

## Beschreibung

Die Erfindung betrifft ein Verbindungsstück aus Metall für Rohrleitungen. Insbesondere betrifft die Erfindung ein Verbindungsstück für Rohrleitungen mit wenigstens einem zylindrischen, rohrförmigen Aufnahmeabschnitt, in den ein Rohrleitungsabschnitt einschiebbar ist. Der Aufnahmeabschnitt ist wenigstens teilweise als verformbarer Pressabschnitt ausgebildet. In dem Pressabschnitt ist wenigstens eine erste, vorzugsweise ringförmige Sicke entlang eines inneren Umfangs des Verbindungsstücks ausgebildet und in die erste Sicke ist ein elastisches Dichtmittel eingebracht, welches die Sicke wenigstens teilweise ausfüllt. Im Kontext dieser Anmeldung ist dabei der Begriff "ringförmig" so zu verstehen, dass eine geschlossene (endlose) Sicke mit beliebigem Profil entlang des inneren Umfangs des Verbindungsstücks ausgebildet ist. Das Profil kann dabei im Querschnitt gerundet, eckig oder mit sonstiger geometrischer Form gebildet sein.

Verbindungsstücke der genannten Art werden auch als Pressfitting bezeichnet. Derartige Pressfittings werden aus verschiedenen Metallen hergestellt, beispielsweise aus Edelstahl, anderen Stahlsorten, Kupfer oder Gussmaterialien. Pressfittings ermöglichen die Verbindung von Rohrleitungen in Gestalt gerader Verbindungen oder unter Bereitstellung von Richtungswechseln oder auch Durchmesserwechseln. Auch Abzweige und Trennstellen können durch derartige Pressfittings bereitgestellt werden. Zur Verbindungsherstellung wird in einen rohrförmigen Aufnahmeabschnitt des Verbindungsstücks ein Rohr eingeschoben und anschließend wird im Bereich der Sicke mit dem eingelegten Dichtmittel über ein Presswerkzeug eine plastische Verformung des Verbindungsstückes vorgenommen. Dazu kann das Presswerkzeug neben der Sicke angreifen oder auch die Sicke selbst mitverformen oder aber die Sicke übergreifen und beidseitig der Sicke eine plastische Verformung herbeiführen. Durch die Pressverbindung wird der Ringraum zwischen eingeschobenem Rohr und Verbindungsstück geschlossen und das Dichtmittel, z.B. in Gestalt einer Elastomer-Dichtung, dichtet diese gepresste Verbindung dauerhaft ab.

Die Dichtigkeit wird bei diesen Verbindungen erst durch den Pressvorgang herbeigeführt. Die zunächst durch Ineinanderstecken hergestellte Kombination aus Rohr, Dichtmittel und Fitting ist vor dem Verpressen undicht. Diese Undichtigkeit ist erwünscht, sie ermöglicht es dem Installateur, gar nicht oder nicht vollständig verpresste Dichtstellen bei einer durchzuführenden Druckprobe zu detektieren. Entsprechend liegt das Dichtmittel im nicht verpressten Zustand nicht dichtend am Rohr und/oder Fitting an, sondern gibt Raum für eine erwünschte Undichtheit. Beim Verpressen des Fittings wird dieser "leak path" dauerhaft geschlossen und die Verbindung dauerhaft gedichtet.

Verbindungsstücke, die zur Herstellung einer Verbindung der genannten Art geeignet sind, sind beispielsweise aus dem Dokument DE 195 09 586 C1 oder auch dem Dokument DE 102005 043 238 A1 bekannt.

Es ist das Ziel von Pressverbindungen, eine dauerhaft dichtende Verbindung herzustellen. Unter Einfluss extremer Umweltbedingungen, insbesondere im Brandfall oder bei Einwirkung übermäßiger Hitze kann es jedoch zu Undichtigkeiten im Bereich der Pressverbindung kommen.

Das Dokument US 5 405 171 A beschreibt eine mehrteilige Rohrverbindung, bei der die Dichtungselemente eine verschiebbare Schnittstelle aufweisen. Diese verschiebbare Schnittstelle ermöglicht eine Bewegung der Teile während der Montage und Demontage der Rohrverbindung, um Rotations- und andere Spannungen zu reduzieren, die die Dichtung oder die Dichtflächen der Rohre beschädigen könnten.

Das Dokument EP 3 232 109 A1 beschreibt ein Rohrleitungssystem, das eine metallische Rohrleitung zur Durchdringung einer Gebäudedecke oder -wand sowie eine Etagenleitung umfasst, die aus Kunststoff oder einem Kunststoff-Metall-Mehrschichtverbundrohr besteht. Die Etagenleitung ist über ein Übergangsstück an ein metallisches Anschlussstück der Rohrleitung angeschlossen und wird mit einer Brandschutzdämmung versehen. Das Übergangsstück enthält ein Einsteckteil und einen Pressring, die die Verbindung zwischen der Etagenleitung und dem Anschlussstück sicherstellen.

Aus dem Dokument US10190706(B2) ist eine flammhemmende Schlauchbaugruppe bekannt, die eine innere rohrförmige Schicht und eine flammhemmende Schicht umfasst. Die flammhemmende Schicht besteht aus einem polymeren Bindemittel und expandierbarem Graphit, der sich bei Erwärmung ausdehnt und nach der Expansion grosse Teile der äußeren Oberfläche der inneren rohrförmigen Schicht bedeckt.

Aufgabe der Erfindung ist es, dauerhafte Pressverbindungen unter Extrembedingungen durch Bereitstellung eines verbesserten Verbindungsstückes zu ermöglichen.

Diese Aufgabe wird gelöst durch ein Verbindungsstück aus Metall mit den Merkmalen des Patentanspruches 1 sowie ein Verbindungssystem mit den Merkmalen des Patentanspruchs 17.

Gemäß der Erfindung weist das Verbindungsstück in dem Aufnahmeabschnitt wenigstens abschnittsweise Bereiche auf, in denen ein intumeszierendes Material, insbesondere ein Blähgraphitmaterial angeordnet ist.

Der Aufnahmeabschnitt dient gemäß vorstehender Erläuterung dazu, bei Herstellung einer Verbindung ein rohrförmiges Teil aufzunehmen, so dass sich zwischen dem Verbindungsstück, welches einen freien Durchmesser zur Aufnahme der Rohrleitung aufweist, und der eingeschobenen Rohrleitung ein Ringspalt bildet. In diesem Verbindungsabschnitt liegt das Dichtmittel. Außerdem ist in diesem Verbindungsabschnitt intumeszierendes Material, insbesondere Blähgraphit angeordnet. Je nach Verwendungsbereich werden intumeszierende Materialien auch als Dämmschichtbildner bezeichnet. Intumeszierendes Material (auch bezeichnet als intumeszentes Material), insbesondere Blähgraphit, ist ein Werkstoff, der aufgrund seiner flammhemmenden Wirkung im Brandschutz eingesetzt wird. Diese Eigenschaft wird als "Intumeszenz" bezeichnet. Blähgraphit ist dabei ein besonders gängiges und kostengünstiges intumeszierendes Material. Die Aufbereitung von Graphit zu Blähgraphit lagert in die Schichtgitterstruktur von Graphit andere Substanzen oder Verbindungen ein, die bei Hitzeeinwirkung die Schichten der Graphit-Gitterstruktur auseinandertreiben, so dass der Werkstoff unter Hitzeeinwirkung expandiert. Die dabei erreichte Expansion ist erheblich und kann hinsichtlich des Endvolumens das bis zu 600fache des Anfangsvolumens erreichen. Durch diese Volumenvergrößerung können Freiräume im Brandfall für gasförmige und flüssige Fluide oder den Flammenüberschlag gesperrt werden (unter Fluiden wird im Weiteren jeder gasförmige oder flüssige Stoff verstanden). Weiterhin wird eine sehr große Oberfläche gebildet, die eine schnelle Oxidation des Kohlenstoffs ermöglicht, so dass der Sauerstoff in diesem Bereich der Verbrennungsluft durch die Oxidation entzogen wird. Auch dies begünstigt die Flammhemmung.

Es gibt jedoch auch andere intumeszierende Materialien, die in gleichwirkender und gleichwertiger Weise verwendet werden können. So sind z.B. intumeszierende Materialien z.B. im Bereich der Stahlbeschichtung bekannt, welche polyvalenten Alkohol (meist Pentaerythritol), außerdem meist Melamin und einen Phosphor-Donor (z. B. Ammoniumpolyphosphat) enthalten. Ammoniumpolyphosphat (APP) zersetzt sich bei Temperaturen über 250 °C zu Phosphorsäure, diese reagiert mit Pentaerythritol zu Phosphatestern, welche sich weiter zu Kohlendioxid und kohlenstoff- sowie phosphorhaltigen Überresten zersetzen. Bei Hitze zersetzt sich das Melamin zu gasförmigem Ammoniak, das zur Expansion der Ammoniumpolyphosphat-Überreste führt. Dabei entsteht ein wärmeisolierender Schaum.

Intumeszierendes Material, insbesondere Blähgraphit kann in verschiedensten Materialformen, insbesondere als Pulver oder Flocken sowie auch geformte Körper oder flächige Auflage oder als Lack hergestellt und am Markt erworben werden. Es lässt sich aus diesen Materialien in einfacher Weise in dem erfindungsgemäßen Verbindungsstück ein Materialdepot des Blähgraphites einrichten. Das Verbindungsstück ist ohne besondere Rücksicht auf die intumeszierende Einlage, insbesondere Blähgraphiteinlage, ebenso wie die bisherigen Pressfittings zu verwenden, es wird jedoch durch die Platzierung eines intumeszierenden Materialdepots eine deutlich verbesserte Flammschutzwirkung erzielt. Dadurch, dass intumeszierendes Material im Aufnahmeabschnitt eingebracht wird, wird im Brandfall, also bei Erhitzung dieses intumeszierenden Materials, der Ringspalt zwischen eingeschobenem Rohr und dem Verbindungsstück gedichtet. Aufgrund der Expansion des intumeszierendes Materials wird dabei eine Selbstspannung des Systems erreicht, so dass der Ringspalt weitgehend abgedichtet ist. Aufgrund des geringen zu füllenden Volumens im Ringspalt und der vorstehend genannten erheblichen Volumenausdehnung des intumeszierenden Materials kann selbst bei fortgesetzter Hitzeeinwirkung eine Dichtigkeit selbst bei längerer Brandeinwirkung durch Nachexpansion gewährleistet werden.

Zwar ist das intumeszierende Material, insbesondere Blähgraphit, in jedem Fall zumindest teilweise in dem Aufnahmeabschnitt angeordnet, es ist jedoch nicht unbedingt erforderlich, sämtliches intumeszierendes Material in diesem Abschnitt zu platzieren. Insbesondere ist es auch nicht erforderlich (wenn auch möglich), dass sich das intumeszierende Material in dem Bereich des Aufnahmeabschnittes befindet, welcher als Pressabschnitt dient. Das intumeszierende Material kann also sowohl in Aufnahmeabschnittsbereichen platziert sein, die nicht als Pressabschnitt dienen, es kann jedoch auch, zumindest teilweise, in dem Pressabschnitt angeordnet sein und außerdem können Teile des intumeszierenden Materials auch außerhalb des Aufnahmeabschnitts platziert sein.

Es ist damit ein einfach verwendbares Verbindungsstück hergestellt, welches von dem Anwender in derselben Weise zu verarbeiten und zur Herstellung einer Pressverbindung verwendbar ist, wie herkömmliche Verbindungsstücke zur Herstellung von Pressverbindungen. Der erhebliche Mehrnutzen des Flammschutzes wird ohne weiteres Zutun bei der Montage automatisch bereitgestellt, da die Depots des intumeszierenden Materials, insbesondere Blähgraphitdepots zusammen mit dem Verbindungsstück derart ortsfest in dem Verbindungsstück platziert sind, dass sie zur Dichtung des Ringspaltes bei hergestellter Pressverbindung optimal platziert sind.

In einer bevorzugten Ausführungsform der Erfindung, ist das intumeszierende Material, insbesondere Blähgraphit, zumindest teilweise in Ausnehmungen in der Innenseite des Verbindungsstückes eingebracht.

Gemäß dieser Ausführungsform liegt sowohl das Dichtmittel in einer zugeordneten Sicke in dem Aufnahmeabschnitt als auch das intumeszierende Material in wenigstens einer Ausnehmung.

Wie oben beschrieben kann intumeszierendes Material in verschiedensten Materialformen vorliegen (z.B. als Pulver oder Flocken sowie auch geformte Körper oder flächige Auflage oder als Lack). Es lässt sich aus diesen Materialien in einfacher Weise in zugeordneten Ausnehmungen in dem Verbindungsstück ein Materialdepot des intumeszierenden Materials einrichten. Die Platzierung in Ausnehmungen erlaubt die Bildung eines besonders voluminösen Materialdepots. Außerdem ist durch die Platzierung in Ausnehmungen das intumeszierende Material im Normalbetrieb und bei der Einrichtung der Verbindung des Verbindungsstückes geschützt, so dass ein eingeschobener Rohrleitungsabschnitt das intumeszierende Material nicht abtragen kann.

Wenn im Kontext dieser Erfindung von Ausnehmung die Rede ist, sind damit materialfreie Bereiche, z.B. auf der Innenseite des Verbindungsstückes bezeichnet, die durch Verformung oder Materialabtrag gebildet werden. Diese materialfreien Bereiche sind also Rücksprünge in der durchgehenden Wand des Verbindungsstückes und insbesondere so ausgebildet, dass ein eingeschobenes Rohr in diese Bereiche nicht mit einer abspanenden oder abscherenden Wirkung vordringen kann, so dass das darin platzierte Blähgraphitdepot vor eingeschobenen Rohren und einer mechanischen Einwirkung geschützt sind.

Die Lage, Gestaltung und Geometrie der Ausnehmungen, in welche das intumeszierende Material, insbesondere Blähgraphit eingebracht ist, sind abhängig von der Form, in welcher das Blähgraphit in die Ausnehmungen eingebracht wird. Wird beispielsweise ein Körper aus intumeszierendem Material in seiner Größe und Kontur auf das Verbindungsstück angepasst und in den Verbindungsabschnitt eingebracht, kann dazu eine entsprechende ringförmige Ausnehmung im Verbindungsstück platziert sein. Dies Ausnehmung kann auch durch die erste Sicke gebildet sein, so dass Dichtmittel und intumeszierendes Material in einer gemeinsamen Ausnehmung, nämlich der Sicke, aufgenommen sind. Alternativ können jedoch auch unterbrochene oder ununterbrochene Bereiche von Ausnehmungen auf der Innenseite des Verbindungsstückes in dem Verbindungsabschnitt angebracht werden, die mit Blähgraphitpulver, ggf. unter Beimengung eines Haftvermittlers gefüllt werden.

Es ist besonders bevorzugt, wenn die Ausnehmungen, die durch das Blähgraphit wenigstens teilweise gefüllt werden, durch dieselbe erste Sicke gebildet sind, in welcher auch das Dichtmittel eingebracht ist.

Gemäß dieser Ausführungsform wird die ohnehin vorhandene Sicke, welche das elastische Dichtmittel zum Dichten der Pressverbindung aufnimmt, auch zur Aufnahme wenigstens eines Teils des Blähgraphites verwendet. Dabei kann das intumeszierende Material (insbesondere Blähgraphit) vor dem Einlegen des Dichtmittels in die Sicke gleichsam als Unterlage platziert werden oder es wird neben dem Dichtmittel in einem oder beide der seitlichen Ausläufer der Sicke platziert. Die Randbereiche einer Sicke, wo das Wandungsmaterial wieder in eine gerade Wandung übergeht, sind üblicherweise mit dem Dichtmittel nicht gefüllt, so dass hier Aufnahmebereiche zur großzügigen Aufnahme des intumeszierenden Materials (insbesondere Blähgraphit) dienen können. Das intumeszierende Material kann dabei in diesen Bereichen aufgestrichen werden oder es wird als Ring oder Folie in diese Bereiche eingelegt.

Es ist dabei grundsätzlich auch möglich, die erste Sicke im seitlichen Bereich, also in axialer Richtung des Verbindungsstückes versetzt zur eingelegten Dichtung teilweise zu erweitern, um einen größeren Aufnahmebereich für das intumeszierende Material bereitzustellen.

Es ist dabei besonders vorteilhaft, wenn das intumeszierende Material in der ersten Sicke zwischen Dichtmittel und Wandmaterial des Verbindungsstückes angeordnet ist.

In diesem Bereich ist das intumeszierende Material durch das Dichtmittel geschützt, solange es nicht zu einer Erhitzung des Verbindungsstückes kommt, die zu einer Expansion des intumeszierenden Materials führen würde. Kommt es tatsächlich zum Brandfall, so wird zunächst durch die expansive Wirkung des intumeszierenden Materials das Dichtmittel längst möglich als Dichtstoff an die innere Rohrleitung gepresst, wobei sogar noch eine thermische Isolierung zur Außenhaut durch das expandierende intumeszierende Material bereitgestellt wird. Auf diese Weise wird das Dichtmittel längsmöglich in seiner Dichtwirkung unterstützt. Ist das Dichtmittel dann durch thermische Zersetzung unwirksam, wird dessen Raum durch das expandierende intumeszierende Material eingenommen.

Gemäß einer vorteilhaften Weiterbildung der Erfindung ist ein Krallenring im Pressabschnitt an der Innenseite des Aufnahmeabschnitts angeordnet.

Krallenringe dienen der Sicherung von Rohrverbindungen, insbesondere gegen Zugwirkungen in Leitungsrichtung. Es sind verschiedene Gestaltungen von Krallenringen bekannt, z.B. einschneidende, verzahnende oder auch flach konturierte und damit oberflächenschonende Krallenringe. Die Verwendung von Krallenringen in Kombination mit intumeszierendem Material gemäß der Erfindung gewährleistet eine gesteigerte Sicherung der Verbindung bei mechanischer und auch gleichzeitiger thermischer Beanspruchung.

In einer Weiterbildung der Erfindung ist das intumeszierende Material angrenzend an den Krallenring oder innerhalb des Krallenrings angeordnet.

Die unmittelbare Kombination von Krallenring und intumeszierendem Material führt zu einer raumsparenden Anordnung sowie einem Schutz des intumeszierenden Materials durch den robusten Krallenring. Weist der Krallenring zwei Schneidkanten auf, die einen zwischenliegenden Bereich begrenzen, kann das intumeszierende Material in diesem Ringraum platziert werden, welcher nach Verpressen durch den Krallenring geschützt ist, da dieser mit den umfassenden Schneidkanten in das eingeschobene Rohr einschneidet und damit das intumeszierende Material zwischen Krallenring und eingeschobenen Rohr kapselt. Das intumeszierende Material kann so weitgehend vor Kontakt mit der Umgebung und dem geführten Fluid geschützt sein.

Es ist vorteilhaft, wenn das intumeszierende Material und der Krallenring zusammen mit dem elastischen Dichtmittel in der ersten Sicke angeordnet sind.

Die Anordnung in einer gemeinsamen Sicke ermöglicht eine kompaktere Bauform und raschere Montage durch kombiniertes Einlegen mehrerer Bestandteile.

In einer Weiterbildung der Erfindung ist ein Stützring neben dem elastischen Dichtmittel angeordnet, wobei der Stützring wenigstens teilweise aus intumeszierende Material (insbesondere Blähgraphit) besteht oder mit intumeszierendem Material beschichtet ist.

Stützringe sind bewährte Mittel, um Dichtmittel, insbesondere ringförmige Dichtungen, bei hohem Druck vor Zerstörung zu schützen. Sie verhindern eine übermäßige Verformung des Dichtmittel, z.B. in den Dichtspalt hinein. Die Ausbildung eines Stützringes wenigstens teilweise aus intumeszierendem Material reduziert nochmals den Bauraum und das Gewicht des Verbindungsstücks. Das intumeszierende Material kann in Gestalt einer Einlage, Auflage oder Beschichtung des Stützrings ausgebildet sein. Der Stützring kann auch aus intumeszierendem Material gefertigt sein oder aus einer Materialkombination von intumeszierendem Material und weiteren Materialien bestehen. Beispielhaft können Stützringe aus Stahl, Edelstahl oder Kupferlegierung mit vollständiger oder teilweiser Beschichtung mit intumeszierendem Material verwendet werden.

In einer alternativen Gestaltung der Erfindung ist das intumeszierende Material in wenigstens einer zweiten Sicke angeordnet, die in dem Verbindungsstück in axialer Richtung des Aufnahmeabschnitts versetzt ausgebildet ist.

In dieser Ausgestaltung wird für das intumeszierende Material im Verbindungsstück also gezielt eine zweite Sicke gebildet, die hinsichtlich ihrer Geometrie und Abmessung durchaus verschieden von der ersten Sicke sein kann. Eine solche Sicke ist durch entsprechende Formgebungswerkzeuge gut herstellbar und bietet einen Aufnahmeraum, in dem sowohl intumeszierendes Material in Pulver- oder Flockenform, ggf. unter Vermischung mit einem Haftvermittler, als auch intumeszierendes Material in Gestalt von vorgeformten Körpern, beispielsweise als Ringe eingelegt werden können.

In einer Weiterbildung dieser Gestaltung der Erfindung kann die erste Sicke benachbart zu der zweiten Sicke ausgebildet sein, so dass die Sicken ineinander übergehen und eine Doppelsicke ausgebildet ist, von denen ein Teil der Sicke durch ein Dichtmittel und das andere Teil der Sicke teilweise durch intumeszierendes Material gefüllt ist.

Insbesondere in der Gestaltung mit einer Sicke als Aufnahme für das intumeszierende Material, aber auch in anderen Gestaltungen ist es besonders vorteilhaft, wenn das intumeszierende Material wenigstens teilweise als ringförmiger Körper in eine zugeordnete Ausnehmung eingesetzt ist.

Die Platzierung eines derart vorgefertigten Körpers gewährleistet eine radial durchgehende Platzierung des intumeszierenden Materials entlang des gesamten Umfangs im Verbindungsstück und dabei einer äußerst gleichmäßige Verteilung des intumeszierenden Material.

In einer anderen bevorzugten Gestaltung der Erfindung ist das intumeszierende Material als Folie in das Verbindungsstück eingebracht, wobei die Folie in eine zugeordnete Ausnehmung, also beispielsweise einen Bereich der Sicke oder Bereiche mit sonstigen Ausnehmungen platziert ist.

Es ist besonders bevorzugt, wenn die Ausnehmungen, in welchen das intumeszierende Material in dem Verbindungsbereich platziert ist durch eine Profilierung und/oder Aufrauen der Innenseite des Verbindungsstückes im Aufnahmeabschnitt gebildet sind.

Das bereits vorstehend genannte Dokument DE 10 2005 043 238 A1 beschreibt ein Verbindungsstück mit aufgerautem Innenbereich, um den Reibwert zwischen Verbindungsstück und eingeschobenem Rohr nach Herstellung der Pressverbindung zu vergrößern. Dies sichert durch Herstellung einer formschlüssigen Verbindung des aufgerauten Bereichs mit dem eingeschobenen Rohr die Verbindung in mechanischer Weise. Die gleichzeitige Nutzung der vorhandenen Aufrauhung oder Profilierung der Innenbereiche stellt sowohl eine mechanische Sicherung als auch den zusätzlichen Nutzen einer Brandschutzsicherung gleichzeitig zur Verfügung. Bei Herstellen der Pressverbindung werden Material des umliegenden Verbindungsstückes und des eingeschobenen Rohres in den aufgerauten oder profilierten Bereichen teilweise miteinander verzahnt. Wenn in den Ausnehmungen der profilierten Bereiche im Verbindungsstück intumeszierendes Material angeordnet ist, wird dies in dem verzahnten Bereich als Depots zwischen beiden Bauteilen eingeschlossen und entfaltet bei Hitzeeinwirkung seine besonders effektive dichtende Wirkung an dieser Stelle.

In einer bevorzugten Ausgestaltung der Erfindung ist das intumeszierende Material wenigstens teilweise als Sprühauftrag oder Streichauftrag (auch in Gestalt eines Lacks) an dem Verbindungsstück angeordnet. Insbesondere in Kombination mit der Variante einen Innenprofilierung kann ein Sprühauftrag des intumeszierenden Materials für eine verteilte und sparsame Platzierung des intumeszierenden Materials sorgen, bei der auch kleinste Ausnehmungen mit intumeszierendem Material aufgefüllt werden können. Es wird damit eine sparsame, flächige und besonders effektive Dichtung über einen größeren axialen Abschnitt des Verbindungsstückes erreicht.

In einer Weiterbildung der Erfindung ist das intumeszierende Material nicht nur im Verbindungsbereich aufgebracht, sonders wenigstens teilweise im endseitig an dem Aufnahmeabschnitt angrenzenden Bereich des Verbindungsstückes, so dass bei Einschub eines Rohrleitungsabschnittes das intumeszierende Material an eine Endseite des eingeschobenen Rohrleitungsabschnitts angrenzt.

Die Platzierung eines Depot von intumeszierendem Material in dem Bereich, in dem das Rohrende bei hergestellter Pressverbindung zum Liegen kommt, kann die Stirnseite des Ringspaltes zwischen Verbindungsstück und eingeschobenem Rohr im Brandfall dichten. Weiterhin ist es sogar möglich, dass ein Depot von intumeszierendem Material in diesem Bereich angesichts seiner erheblichen Expansion im Brandfall den Rohrquerschnitt insgesamt verringert, also nicht nur den Ringspalt dichtet, was durch das intumeszierende Material im Verbindungsbereich bewirkt wird, sondern sogar eine Verringerung des Rohrquerschnitts bewirkt, welcher durch das Verbindungsstück selbst, also jenseits des stirnseitigen Endes eines eingeschobenen Rohres gebildet ist.

Im Rahmen einer Abwandlung der Erfindung ist das Dichtmittel mit dem intumeszierenden Material zu einem integralen Bauteil verbunden. Das Dichtmittel kann z.B. in der üblichen Form als ringförmige Dichtung ausgebildet sein, wobei jedoch ein innenliegender, ringförmiger Kern aus intumeszierendem Material durch das elastische Material vollständig umgeben ist. Bei Hitzeeinwirkung und Zersetzung des elastischen Mantelmaterials des Dichtmittels expandiert der innenliegende Kern des intumeszierenden Materials und nimmt den Raum des zerstörten Dichtmittel ein. Der Kern aus intumeszierendem Material muss dabei nicht durchgehend gebildet sein, sondern kann auch aus ummantelten verteilten Depots oder Körnern oder Partikeln von intumeszierendem Material bestehen, die in dem Dichtmittel aufgenommen sind.

In einer Abwandlung kann auch intumeszierendes Material auf der Oberfläche des Dichtmittel zur Bildung eines integralen Bauteils angeordnet sein, so dass das Dichtmittel wenigstens teilweise von intumeszierendem Material ummantelt oder damit beschichtet ist. Die integrale Kombination von Dichtmittel und intumeszierendem Material ermöglicht eine besonders einfache Montage und Anordnung, da jederzeit für eine korrekte Platzierung des intumeszierenden Materials gesorgt ist.

Eine weitere Abwandlung der Erfindung betrifft ein Verbindungssystem, wobei jedoch das intumeszierenden Material nicht im Fitting angeordnet ist, sondern am Außenumfang des Rohrleitungsabschnitts, welcher in das Fitting eingeschoben wird. Entsprechend wird dann ein Verbindungssystem aus Metall für Rohrleitungen bereitgestellt, bei dem ein Verbindungsstück wenigstens einen zylindrischen, rohrförmigen Aufnahmeabschnitt aufweist, wobei der Aufnahmeabschnitt wenigstens teilweise als verformbarer Pressabschnitt ausgebildet ist. Ein Rohrleitungsabschnitt des Verbindungssystems ist in den rohrförmigen Aufnahmeabschnitt einschiebbar. In dem Aufnahmeabschnitt ist auf der Innenseite des Verbindungsstücks wenigstens eine erste ringförmige Sicke entlang eines inneren Umfangs des Verbindungsstücks ausgebildet, in die ein elastisches Dichtmittel eingebracht ist, welches die Sicke wenigstens teilweise ausfüllt. In dieser Abwandlung der Erfindung ist an der Außenseite des Rohrleitungsabschnitts in dem Bereich, welcher in den Aufnahmeabschnitt einschiebbar/eingeschoben ist, wenigstens abschnittsweise intumeszierendes Material angeordnet, wobei das intumeszierende Material zumindest teilweise in Ausnehmungen in der Außenseite des Rohrleitungsabschnitts angeordnet ist oder als Lackauftrag oder Sprühauftrag auf der Außenseite des Rohrleitungsabschnitts aufgebracht ist.

Die Erfindung wird nun unter Bezug auf die beiliegende Zeichnung näher erläutert:
Figuren 1a, 1b und 1c zeigen eine erste Ausführungsform in einer schematischen, teiltransparenten Darstellung, einer Schnittansicht und einer Detailvergrößerung der Schnittansicht;
Figuren 2a, 2b und 2c zeigen eine zweite Ausführungsform in einer schematischen, teiltransparenten Darstellung, einer Schnittansicht und einer Detailvergrößerung der Schnittansicht;
Figuren 3a, 3b und 3c zeigen eine dritte Ausführungsform in einer schematischen, teiltransparenten Darstellung, einer Schnittansicht und einer Detailvergrößerung der Schnittansicht;
Figuren 4a, 4b und 4c zeigen eine vierte Ausführungsform in einer schematischen, teiltransparenten Darstellung, einer Schnittansicht und einer Detailvergrößerung der Schnittansicht;
Figuren 5a, 5b und 5c zeigen eine fünfte Ausführungsform in einer schematischen, teiltransparenten Darstellung, einer Schnittansicht und einer Detailvergrößerung der Schnittansicht;
Figuren 6a, 6b und 6c zeigen eine sechse Ausführungsform in einer schematischen, teiltransparenten Darstellung, einer Schnittansicht und einer Detailvergrößerung der Schnittansicht;
Figuren 7a, 7b und 7c zeigen eine siebte Ausführungsform in einer schematischen, teiltransparenten Darstellung, einer Schnittansicht und einer Detailvergrößerung der Schnittansicht;
Figuren 8a, 8b und 8c zeigen eine achte Ausführungsform in einer schematischen, teiltransparenten Darstellung, einer Schnittansicht und einer Detailvergrößerung der Schnittansicht;
Figuren 9a, 9b und 9c zeigen eine neunte Ausführungsform in einer schematischen, teiltransparenten Darstellung, einer Schnittansicht und einer Detailvergrößerung der Schnittansicht;
Figuren 10a, 10b und 10c zeigen eine zehnte Ausführungsform in einer schematischen, teiltransparenten Darstellung, einer Schnittansicht und einer Detailvergrößerung der Schnittansicht.
Figuren 11a, und 11b zeigen eine elfte Ausführungsform in einer schematischen, teiltransparenten Darstellung und einer Schnittansicht.
Figuren 12a, und 12b zeigen eine zwölfte Ausführungsform in einer schematischen, teiltransparenten Darstellung und einer Schnittansicht.
Figuren 13a, und 13b zeigen eine 13. Ausführungsform in einer schematischen, teiltransparenten Darstellung und einer Schnittansicht.
Figuren 14a, und 14b zeigen eine 14. Ausführungsform in einer schematischen, teiltransparenten Darstellung und einer Schnittansicht.
Figuren 15a, 15b und 15c zeigen eine 15. Ausführungsform in einer schematischen, teiltransparenten Darstellung, einer Schnittansicht und einer Detailvergrößerung der Schnittansicht;
Figuren 16a, 16b und 16c zeigen eine 16. Ausführungsform in einer schematischen, teiltransparenten Darstellung, einer Schnittansicht und einer Detailvergrößerung der Schnittansicht;

Die nachfolgenden Ausführungsbeispiele zeigen zahlreiche Gestaltungen für Ausführungsformen der Erfindung, wobei in diesen Beispielen auf die Verwendung von Blähgraphit als intumeszierendes Material abgestellt wird. Je nach Bedarf, Kosteneffizienz und Verfügbarkeit kann gemäß der obigen Erläuterung jedoch auch abweichendes intumeszierendes Material verwendet werden.

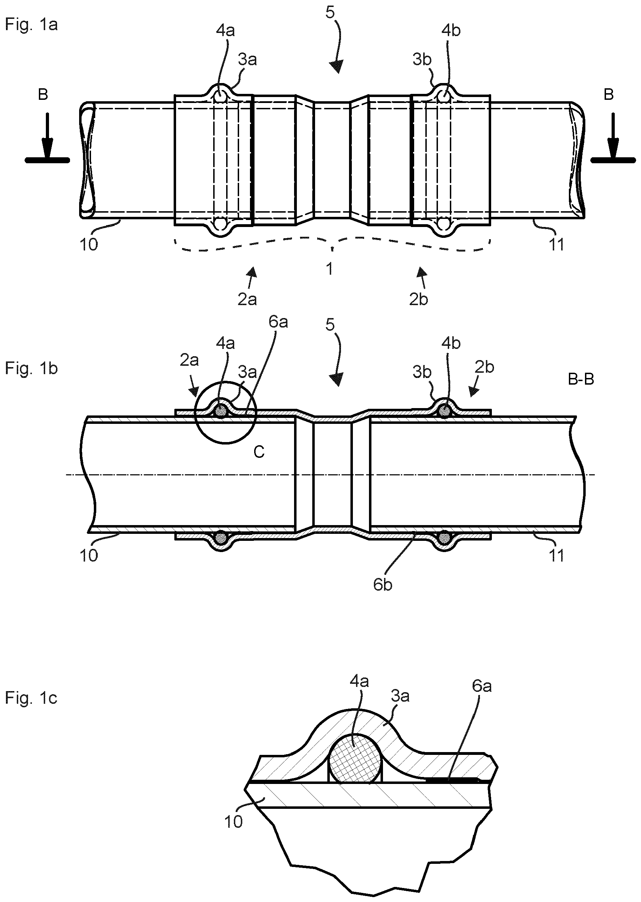

In den Figuren 1a, 1b und 1c ist eine erste Ausführungsform der Erfindung gezeigt. Ein erfindungsgemäßes Verbindungsstück 1 weist zwei voneinander abgewandte zylindrische Abschnitte 2a, 2b auf. Diese sind an den einander zugewandten Enden durch einen eingeschnürten Bereich des Verbindungsstücks 5 verbunden. In jedem der Aufnahmeabschnitte 2a, 2b ist jeweils eine Sicke 3a, 3b ausgebildet. In diese Sicken 3a, 3b ist wiederum jeweils ein elastisches Dichtmittel 4a, 4b eingelegt. Die Darstellung zeigt zwei Rohrleitungsabschnitte 10 und 11, die jeweils in die Aufnahmeabschnitte 2a und 2b des Verbindungsstücks 1 eingeschoben sind. Die Rohrleitungsabschnitte 10 und 11 sind dabei soweit in die jeweiligen Aufnahmeabschnitte 2a und 2b eingeschoben, bis sie im Bereich der Einschnürung des Verbindungsstücks 5 aufgrund des verengten Durchmessers an entsprechende Anschläge gelangen und dort anliegen.

Die Dichtmittel 4a und 4b liegen in diesem Zustand an den eingeschobenen Rohrleitungsabschnitten 10 und 11 entlang deren Umfang an und dichten den Ringraum, wobei eine Pressverbindung zwischen dem Verbindungsstück 1 und den Rohrleitungsabschnitten 10 und 11 durch plastisches Verformen der Aufnahmeabschnitte 2a und 2b erfolgt ist. Die Abschnitte 2a und 2b klemmen also die eingeführten Rohrleitungsabschnitte 10 und 11 und verbinden diese zu einer durchgehenden Fluidverbindung.

Die Figur 1b zeigt einen Schnitt durch die Anordnung aus Figur 1a entlang der markierten Schnittebene. Die Figur 1c zeigt eine Detailvergrößerung, eines in Figur 1b durch einen Kreis kenntlich gemachten Bereichs.

In diesem ersten Ausführungsbeispiel sind Folienlagen 6a, 6b aus Blähgraphit jeweils in einem Randbereich der Sicken 3a und 3b platziert. Die Folienlagen 6a, 6b sind als dünne Materialschicht in einem Ausläufer der Sickenverformung als Ausnehmung platziert. In diesem Ausführungsbeispiel sind die Folienlagen 6a, 6b auf der zur Verbindungsseite weisenden Seite der jeweiligen Sicken 3a, 3b angeordnet. Je nach Platzierung der Folienlagen 6a und 6b ist keine über die übliche Geometrie der Sicke hinausgehende Verformung des Materials im Bereich der Sicke erforderlich, sofern die Folienlage nah genug an die zentrale Sickenausformung herangerückt ist, da dann eine Ausnehmung durch die seitlichen Ausläufer der Sicke ohnehin gebildet ist. Alternativ kann, wie in Figur 1c erkennbar, eine Ausnehmung durch einen geringfügigen Materialabtrag im Randbereich der Sicke erfolgen, in welchen die Folienlagen 6a bzw. 6b eingelegt sind.

Die weiteren Ausführungsbeispiele werden ohne Wiederholung der Beschreibung zur Herstellung einer Pressverbindung mit den eingeschobenen Rohrleitungen 10 und 11 beschrieben, da es darauf bei der Erfindung nicht ankommt. Es gilt das vorstehende für diese Ausführungsbeispiele sinngemäß.

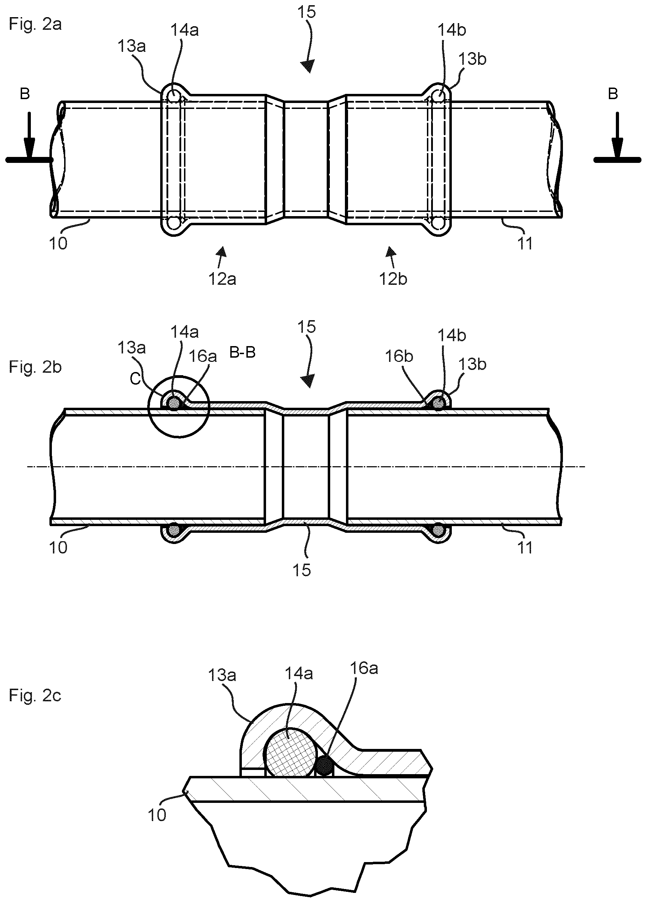

In den Figuren 2a, 2b und 2c ist eine zweite Ausführungsform eines Verbindungsstücks 15 gezeigt, wobei das Blähgraphit als ringförmiger Körper 16a in eine endseitige Sicke 13a an dem Verbindungsstück eingelegt ist, welche auch das Dichtmittel 14a aufnimmt. Dichtmittel 14a und Blähgraphit 16a sind unmittelbar benachbart in derselben endseitigen Sicke angeordnet und bilden auf diese Weise einen Dichtverbund, wobei das ringförmige Material 16a im Brandfall expandiert und den Raum der Sicke 13a vollständig ausfüllt, wenn das Dichtmaterial 14a thermisch zersetzt wird. Auf der abgewandten Seite ist eine entsprechende Sicke 13b mit Dichtmittel 14b und Blähgraphit 16b gebildet.

In diesem Beispiel ist das Blähgraphit in Gestalt des ringförmigen Materials 16a auf derjenigen Seite des Dichtmaterials 14a angeordnet, welche der Einschubseite abgewandt ist, eine Anordnung auf der Seite des Dichtmittels 14a, welche der Einschubseite zugewandt ist, ist jedoch ebenfalls möglich.

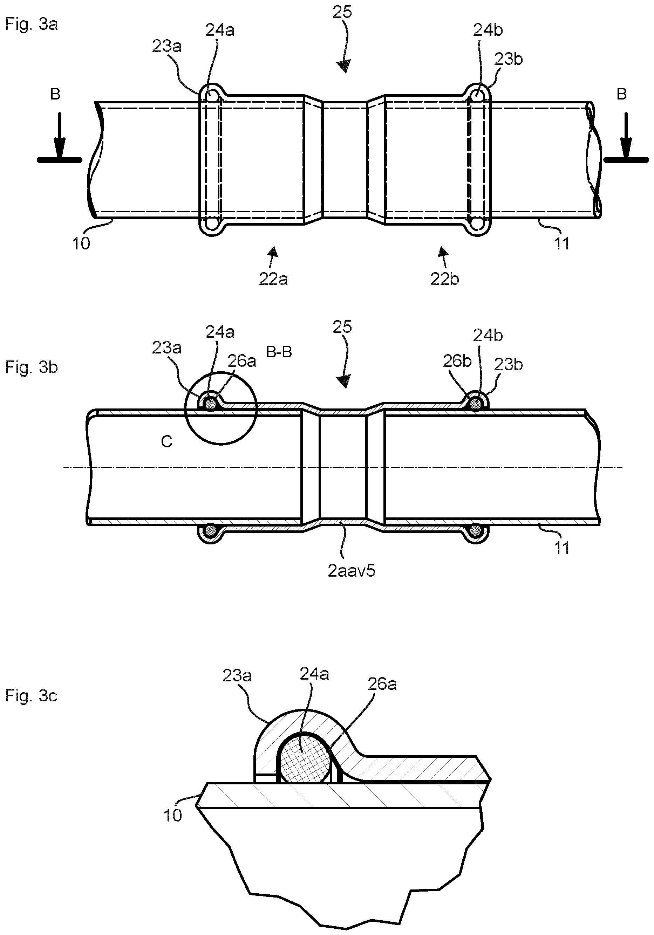

In den Figuren 3a, 3b, 3c ist eine dritte Ausführungsform der Erfindung in Gestalt eines Verbindungsstücks 25 gezeigt. In dieser Darstellung ist das Blähgraphit als Folie 26a zwischen dem Material der Sicke 23a und dem Dichtmaterial 24a eingelegt und wird durch das Dichtmaterial 24a in seiner Lage fixiert. In dieser Gestaltung kann eine thermische Entkopplung zwischen Dichtmaterial 24a und beispielsweise einer Hitzequelle in der Umgebung erfolgen, wenn das Blähgraphit in dem Folienmaterial 26a expandiert. Auf der abgewandten Seite ist eine entsprechende Sicke 23b mit Dichtmittel 24b und Blähgraphit 26b gebildet.

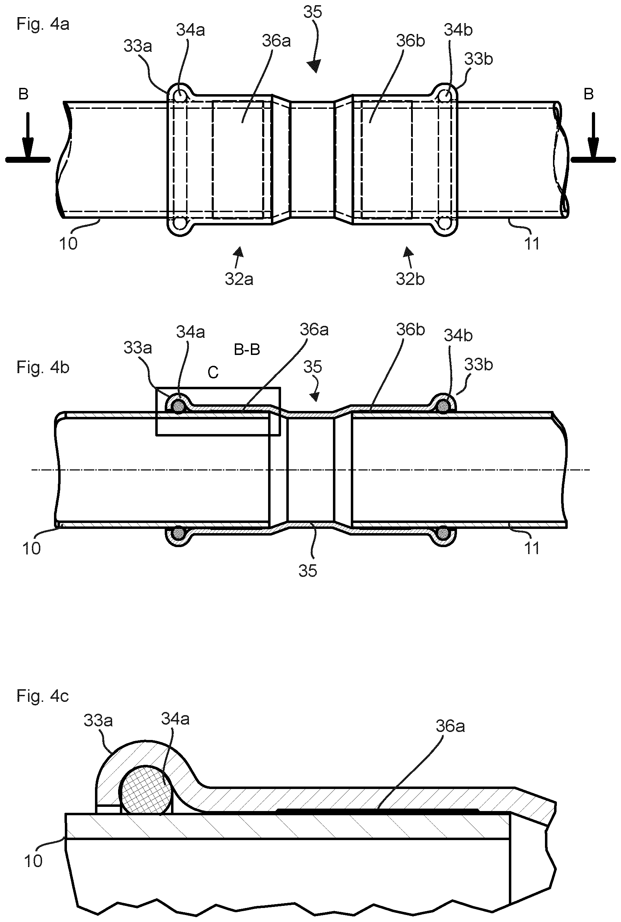

In den Figuren 4a, 4b und 4c ist ein Verbindungsstück 35 mit zwei Endseiten dargestellt, wobei in diesem Beispiel jedoch das Blähgraphit als Folienmaterial 36a, 36b in einer zugehörigen Ausnehmung, die in diesem Beispiel als Ringnut ausgebildet ist, beabstandet zu den Sicken 33a, 33b eingelegt ist. Die nutförmigen Ausnehmungen für das Blähgraphitmaterial sind durch Fräsen oder ein entsprechendes Verformungswerkzeug ausgebildet. Es ist in Figur 4c ersichtlich, dass die Ausnehmung und die Einbringung der Folie 36a in die Ausnehmung das Blähgraphit vor einem Abschaben oder Abscheren durch das eingeschobene Rohrstück 10 schützt. Die Dichtmittel 34a, 34b in den Sicken 33a, 33b dichten in üblicher Weise den Ringraum bei normalen Betriebsbedingungen.

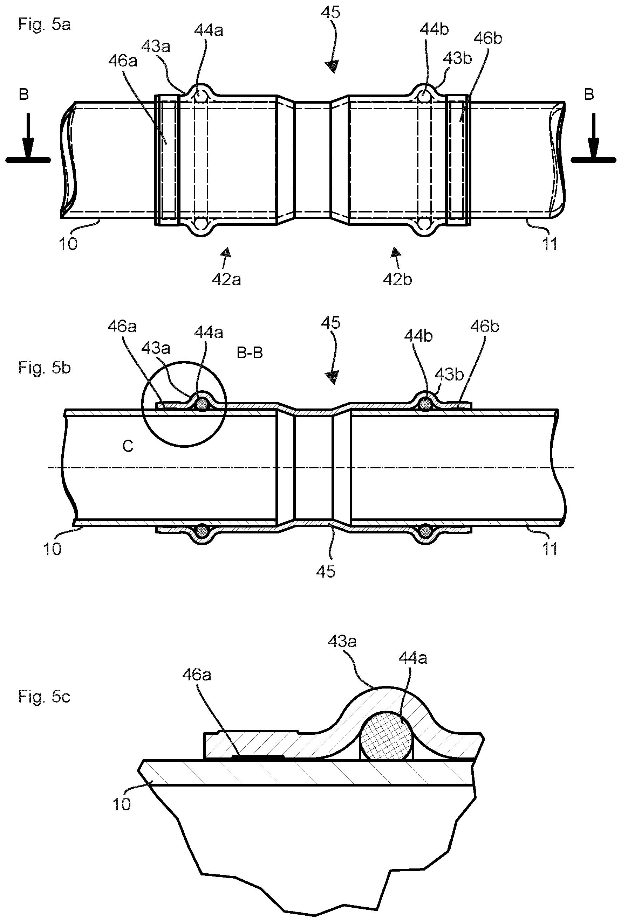

Ein fünftes Ausführungsbeispiel eines erfindungsgemäßen Verbindungsstücks 45 ist in den Figuren 5a, 5b und 5c gezeigt. Dort ist das Blähgraphit als Folienmaterial 46a, 46b in einer der Einschubseite der jeweiligen Anschlüsse zugewandten Seite der Dichtmittel 44a, 44b platziert. Es handelt sich entsprechend um eine Abwandlung des vierten Ausführungsbeispiels hinsichtlich der Abfolge von Dichtmitteln 44a, 44b und Blähgraphit 46a, 46b.

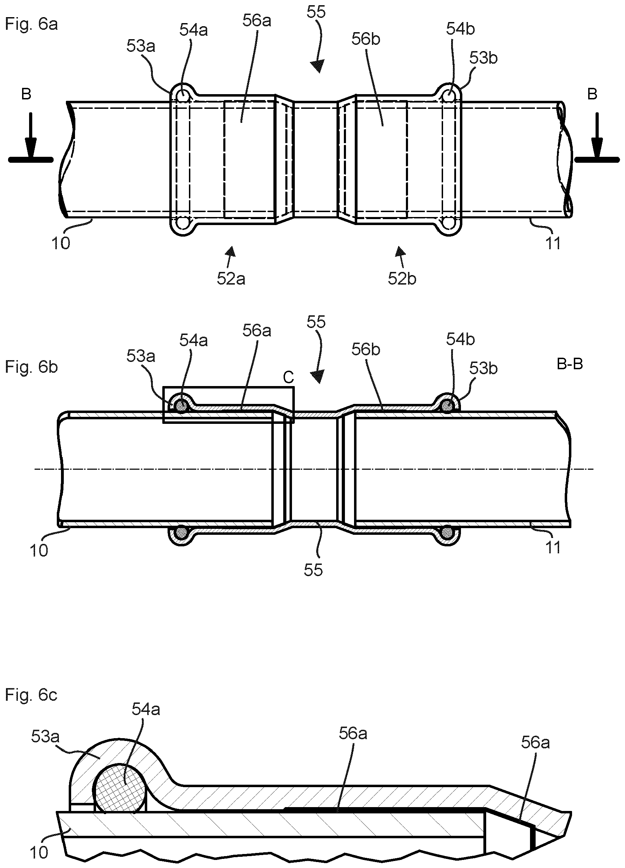

Die Figuren 6a, 6b und 6c zeigen eine sechste Ausführungsform der Erfindung in Gestalt eines Verbindungsstücks 55, wobei sich hier Folien 56a, 56b aus Blähgraphit über zugeordnete Ausnehmungen im Einschubbereich bis in den Mittelbereich des Verbindungsstücks 55 erstrecken. Das Blähgraphit 56a, 56b ist also sowohl im Einschubbereich und dort in einer Ausnehmung als auch in dem Bereich angeordnet, in den die eingeschobenen Rohre 10, 11 nicht hineinragen. Auf diese Weise ist durch eine Expansion des Blähgraphits möglich, sowohl den Ringspalt zwischen dem Verbindungsstück und den eingeschobenen Rohrleitungsabschnitten 10, 11 zu dichten als auch den Rohrquerschnitt zur Fluidströmung an sich zu verengen oder sogar ganz zu verschließen, je nach Foliendicke und Expansionsvermögen des Blähgraphits.

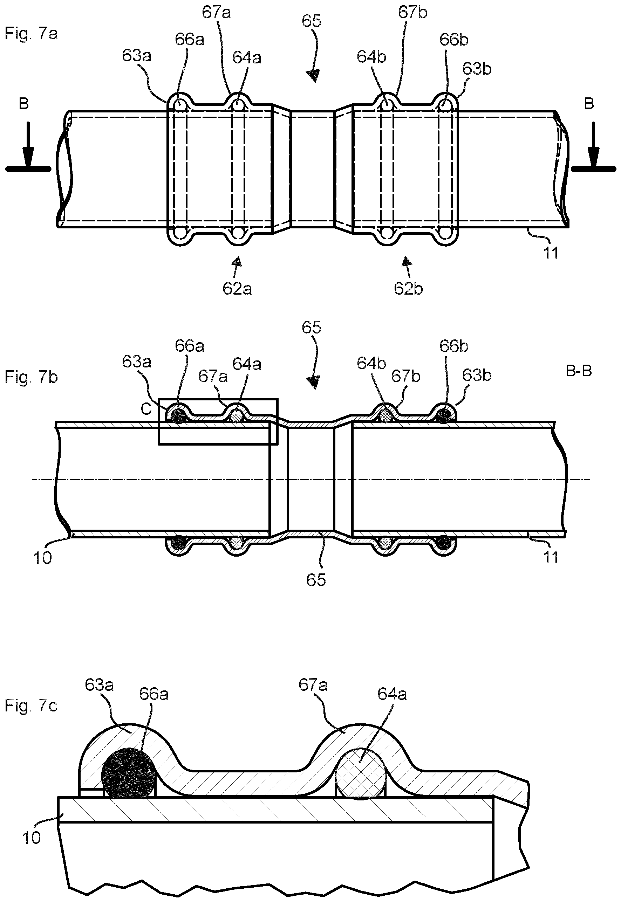

In den Figuren 7a, 7b und 7c ist ein Verbindungsstück 65 gemäß einem siebten Ausführungsbeispiel gezeigt. In diesem Ausführungsbeispiel sind je Seite zwei Sicken 63a, 67a bzw. 63b, 67b ausgebildet, wovon jeweils eine das Dichtmittel 64a, 64b aufnimmt und eine weitere einen Ring aus Blähgraphit 66a, 66b. In einer solchen Gestaltung kann eine größere Menge Blähgraphit durch die Sickenausbildung aufgenommen werden, was insbesondere bei besonderen Anforderungen an eine Dauerhaftigkeit des Flammschutzes relevant sein kann. In diesem Beispiel sind die Ringe aus Blähgraphit 66a, 66b in denjenigen Sicken angeordnet, die der jeweiligen Einschuböffnung am nächsten liegen. Die Reihenfolge der Anordnung von intumeszierendem Material einerseits und Dichtmitteln andererseits ist jedoch variierbar.

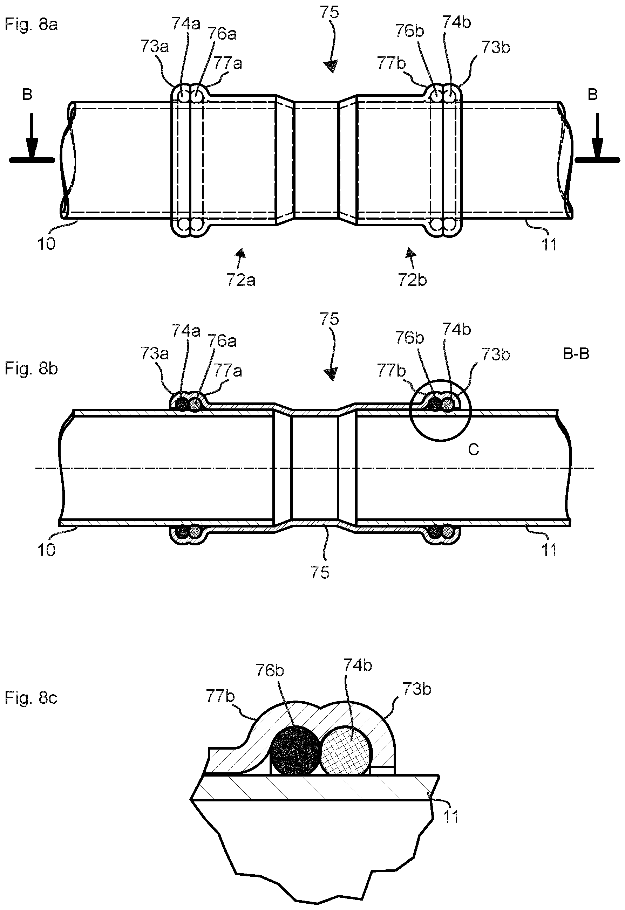

Die Figuren 8a, 8b und 8c zeigen ein Verbindungsstück 75 nach einer achten Ausführungsform der Erfindung, bei der Doppelsicken durch unmittelbare Nebeneinanderanordnung von zwei Sicken 77b, 73b bzw, 77a, 73a gebildet sind. Die Doppelsicken nehmen einerseits die Dichtmittel in Gestalt jeweils eines Dichtrings 74a, 74b sowie jeweils einen Ring 76a, 76b aus einem Blähgraphitmaterial auf.

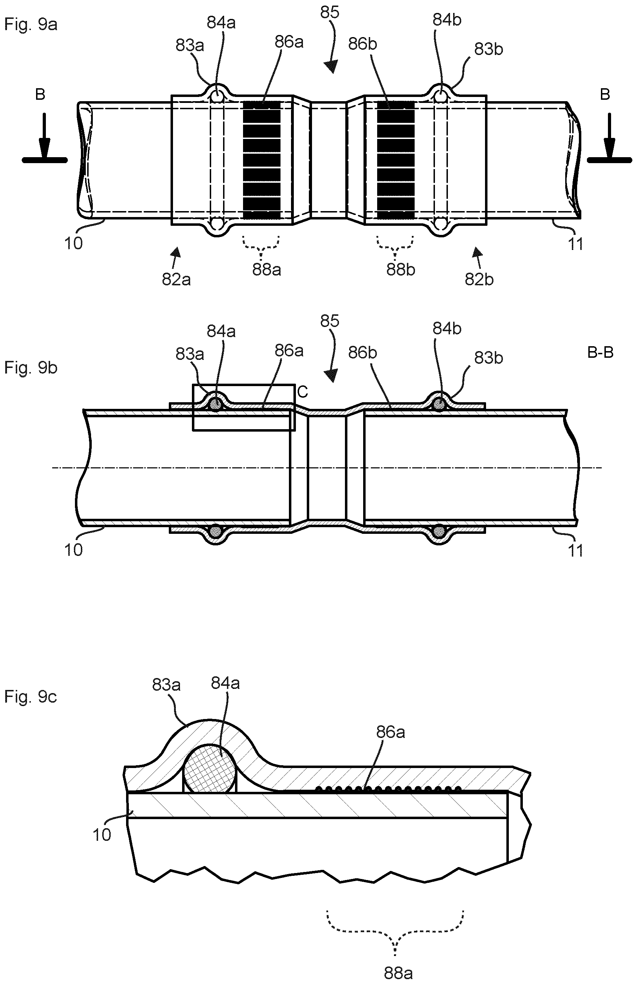

Die Figuren 9a, 9b und 9c zeigen eine neunte Ausführungsform der Erfindung, wobei in dieser Darstellung die Innenseite des Verbindungsstückes 85 im Verbindungsbereich in Abschnitten 88a, 88b aufgeraut oder konturiert ist. Eine solche Aufrauhung oder Konturierung kann beispielsweise durch irgendeine Art des Materialabtrags erfolgen, **z.B.** auch durch Schneiden eines Gewindes oder auch durch Rollen eines Gewindes. Die Ausnehmungen in den Abschnitten 88a, 88b sind mit Blähgraphit 86a, 86b gefüllt, wobei in Umfangsrichtung auch Unterbrechungen und Bereiche ohne Blähgraphit vorhanden sein können, wie Figur 9a zeigt. Im Fall von großer Hitzeeinwirkung dehnt sich das Blähgraphit 86a, 86b so erheblich aus, dass auch die belegungsfreien Bereiche durch das expandierende Blähgraphit belegt werden und Flammschutz gewährleistet ist. In diesem Beispiel sind die Sicken 83a, 83b und deren zugeordnete Dichtmittel 84a, 84b in üblicher Weise ausgebildet.

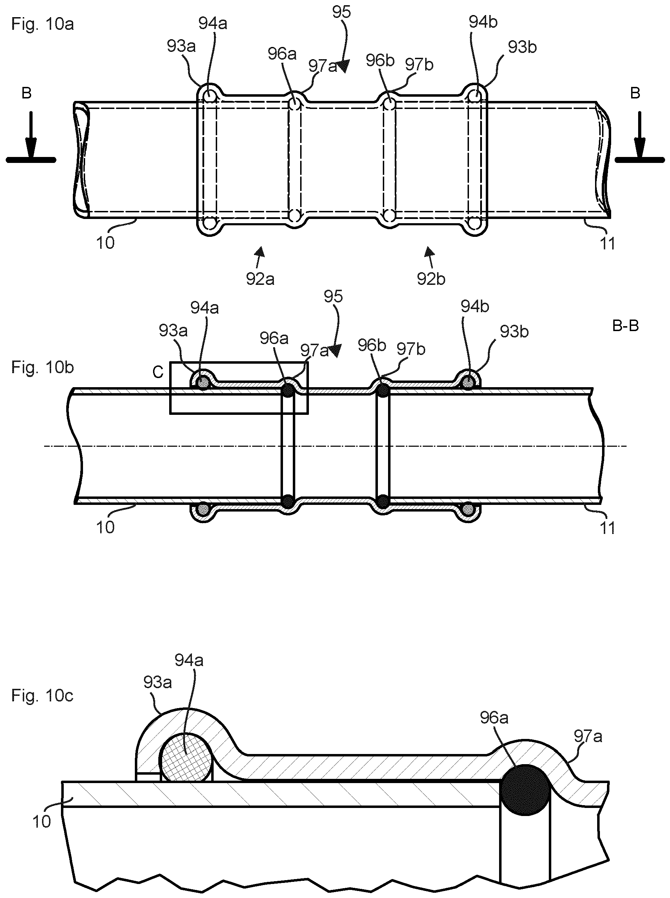

Die Figuren 10a, 10b und 10c zeigen eine zehnte Ausführungsform der Erfindung. Bei dieser Ausführungsform sind am Ende der Aufnahmeabschnitte des Verbindungsstücks 95 Sicken 97a, 97b im Bereich des verjüngten Querschnitts des Verbindungsstücks 95 angeordnet, wobei in diese Sicken 97a, 97b jeweils ein Ring 96a, 96b aus Blähgraphit eingelegt ist. Auf diese Weise ist das Blähgraphit im Endbereich des Aufnahmeabschnitts angeordnet und wirkt in diesem Anschlagbereich für den eingeschobenen Rohrleitungsabschnitt derart, dass es bei Erhitzung sowohl den Ringspalt zwischen Verbindungsstück und eingeschobenem Rohrleitungsabschnitt verschließt als auch den Querschnitt des Fluiddurchlasses insgesamt verengt oder ganz verschließt. In diesem Beispiel sind die Sicken 93a, 93b und deren zugeordnete Dichtmittel 94a, 94b in üblicher Weise ausgebildet.

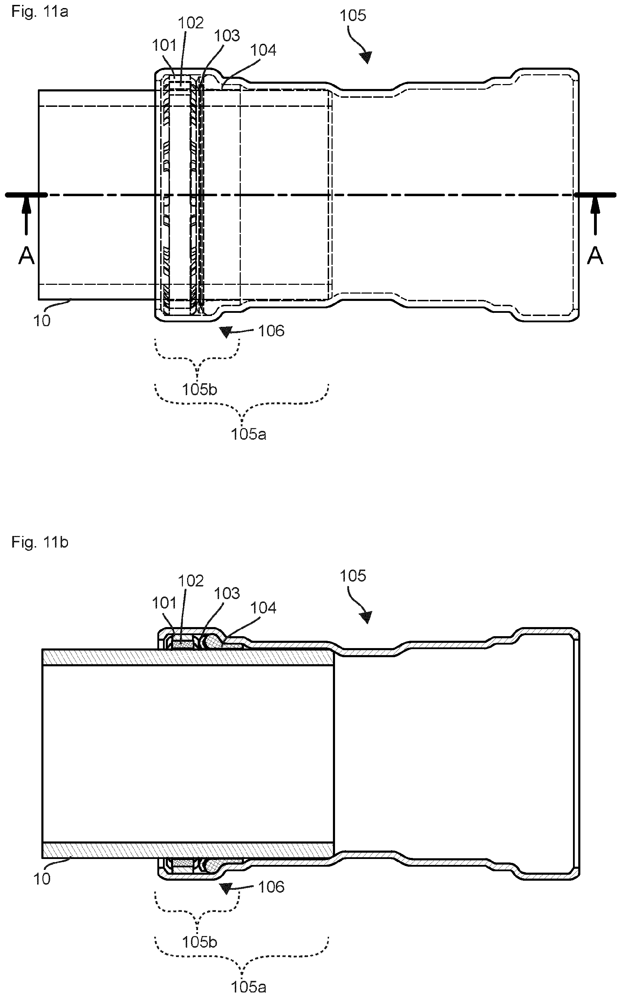

Die Figuren 11a, und 11b zeigen eine elfte Ausführungsform der Erfindung. In dieser Ausführungsform ist ein Krallenring 101 im Pressabschnitt 105b an der Innenseite des Aufnahmeabschnitts 105a des Verbindungsstücks 105 angeordnet.

Wie oben bereits beschrieben, dienen Krallenringe der Sicherung von Rohrverbindungen, insbesondere gegen Zugwirkungen in Leitungsrichtung. In diesem Beispiel ist ein Krallenring 101 mit zwei umlaufenden Schneidkanten gezeigt, die einen Mittelbereich umfassen. Ein Ring aus Blähgraphit 102 ist zwischen den Schneidkanten und damit innerhalb des Krallenrings 101 angeordnet. Diese Kombination von Krallenring 101 und Blähgraphit 102 führt zu einer raumsparenden Anordnung sowie einem Schutz des Blähgraphits 102 durch den robusten Krallenring 101. Wenn im Vorgang des Verpressens des Bereichs 105b der Krallenring in das in den Aufnahmeabschnitt 105a eingeschobene Rohr 10 einschneidet, wird damit das Blähgraphit 102 zwischen Krallenring 101 und eingeschobenem Rohr 10 gekapselt. Das Blähgraphit 102 ist so weitgehend vor Kontakt mit der Umgebung und dem geführten Fluid geschützt. Neben dem Krallenring 101 ist ein Stützring 103 angeordnet sowie ein elastisches Dichtmittel 104, welches als Dichtring mit "sleeve" (Manschette) ausgebildet ist. Alle Komponenten sind in einer gemeinsamen Sicke angeordnet, die sich mit variierendem Durchmesser über den Bereich 105b erstreckt. Die Anordnung in einer gemeinsamen Sicke ermöglicht eine kompakte Bauform und rasche Montage durch kombiniertes Einlegen mehrerer Bestandteile.

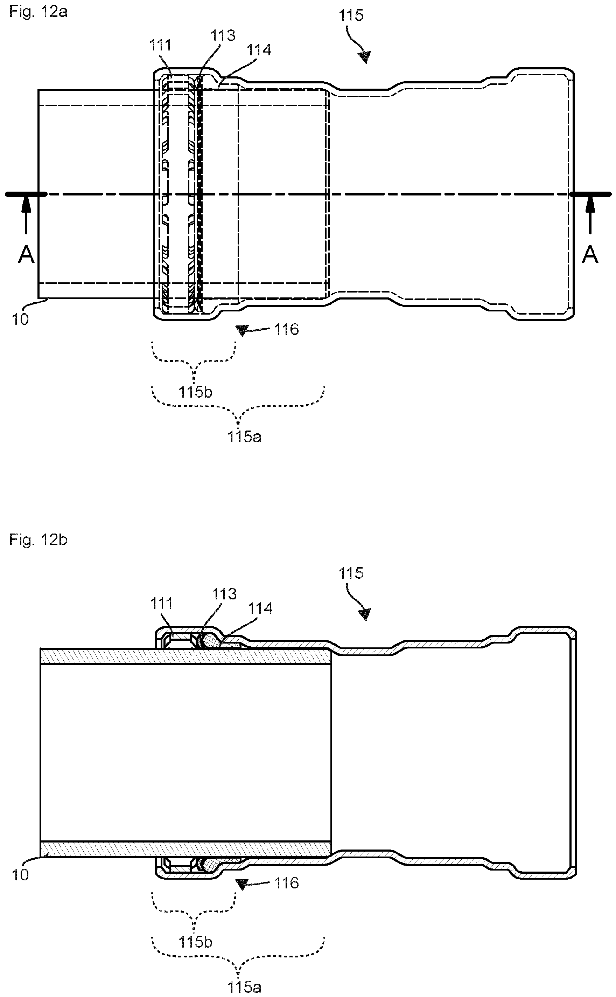

Die Figuren 12a, und 12b zeigen eine zwölfte Ausführungsform der Erfindung in Gestalt eines Verbindungsstücks 115. In dieser Gestaltung ist ein Stützring 113 zwischen dem elastischen Dichtmittel 114 und dem Krallenring 111 im Pressabschnitt 115b angeordnet, wobei der Stützring 113 ganz oder teilweise aus Blähgraphit besteht oder mit Blähgraphit beschichtet ist. Der Stützring 113 verhindert eine übermäßige Verformung des Dichtmittels 114. Die Ausbildung des Stützringes 113 wenigstens teilweise aus Blähgraphit reduziert nochmals den Bauraum und das Gewicht des Verbindungsstücks.

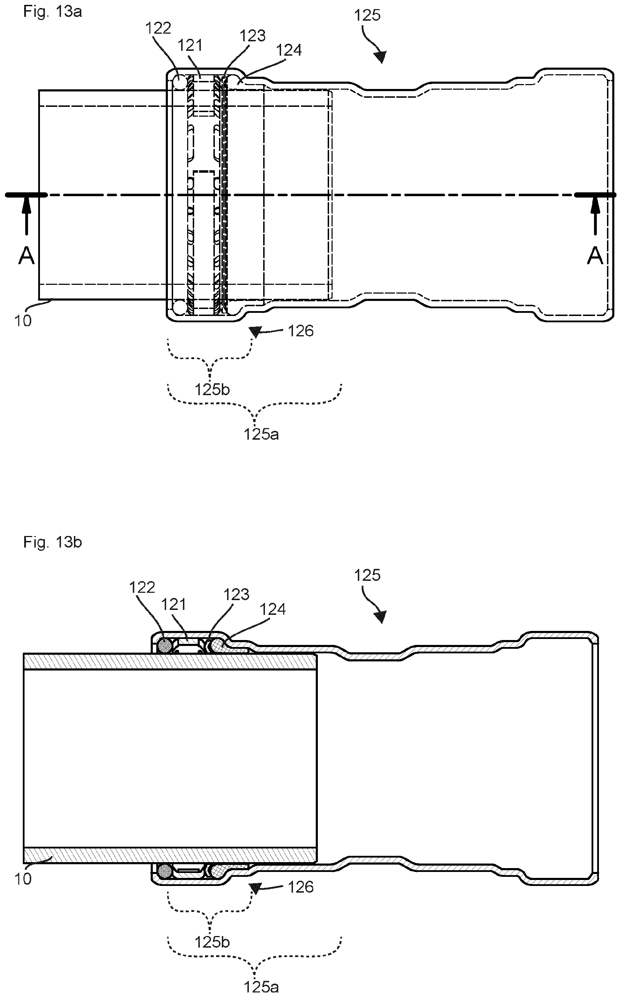

Die Figuren 13a, und 13b zeigen eine 13. Ausführungsform der Erfindung mit einem Verbindungsstück 125. In dieser Ausführungsform sind ein Krallenring 121 neben einem Stützring 123 und einem Dichtring 124 im Pressabschnitt 125b vorgesehen. Ein Blähgraphitring 122 liegt in dieser Gestaltung in Eischubrichtung vor dem Krallenring (wobei die Reihenfolge der Komponenten auch variierbar ist).

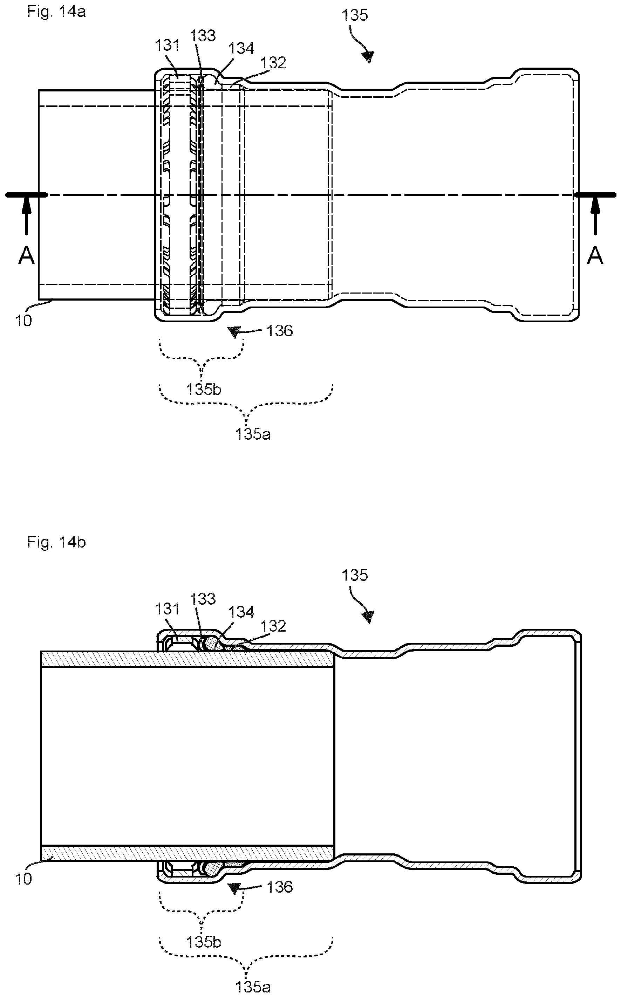

Die Figuren 14a, und 14b zeigen eine 14. Ausführungsform der Erfindung. In dieser Ausführungsform ist in dem Verbindungsstück 135 ein Krallenring 131 neben einem Stützring 133 und einem Dichtring 134 vorgesehen. Das Blähgraphit 132 liegt in dieser Gestaltung in Ringform oder als Folie oder Beschichtung in Eischubrichtung hinter dem Dichtring 134 und ist in dem Endbereich der Pressabschnitts 135b angeordnet, in welchem in den vorherigen Beispielen der Figuren 11a bis 13b die Manschette (sleeve) des Dichtrings 134 platziert wäre.

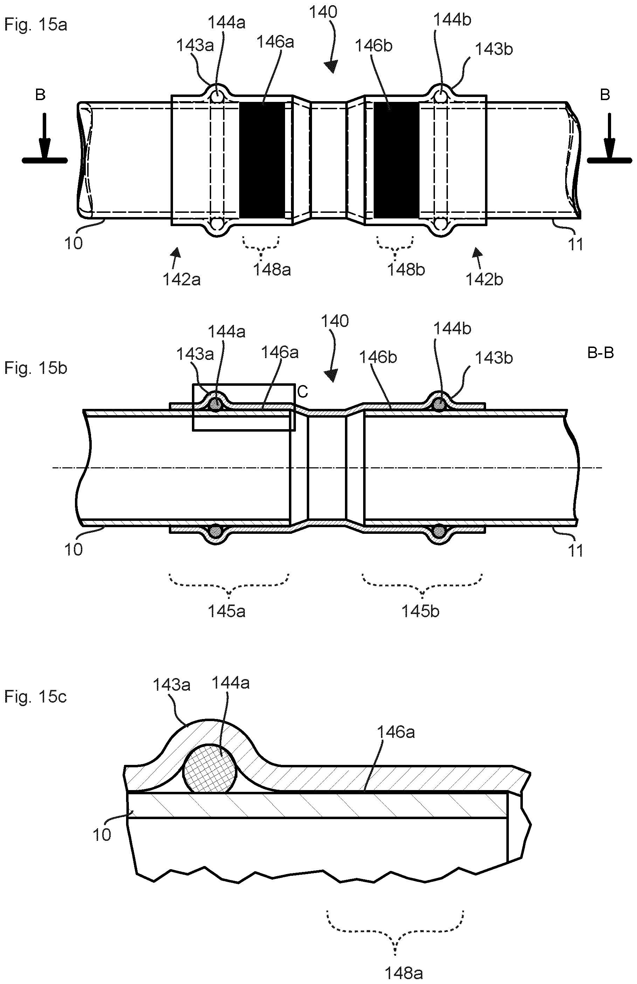

Die Figuren 15a, 15b und 15c zeigen eine 15. Ausführungsform der Erfindung.

Diese Ausführungsform zeichnet sich dadurch aus, dass auf Ausnehmungen zur Aufnahme des intumeszierenden Materials in dem Verbindungsstück verzichtet wurde. Es sind am Verbindungsstück 140 in dessen Einschubbereichen 145a, 145b zwar wiederum Sicken 143a und 143b vorgesehen, in denen zugeordnete Dichtmittel 144a, 144b aufgenommen sind, das intumeszierende Material 146a, 146b ist hier jedoch als Lackauftrag in den Abschnitten 148a und 148b an der Innenseite des Verbindungsstücks 140, in dessen Abschnitten 148a, 148b angebracht. In diesen Bereichen sind in diesem Ausführungsbeispiel keine Ausnehmungen ausgebildet, so dass das intumeszierende Material als auftragende Schicht im Ringspalt zwischen Verbindungsstück und eingeschobenem Rohr vorliegt.

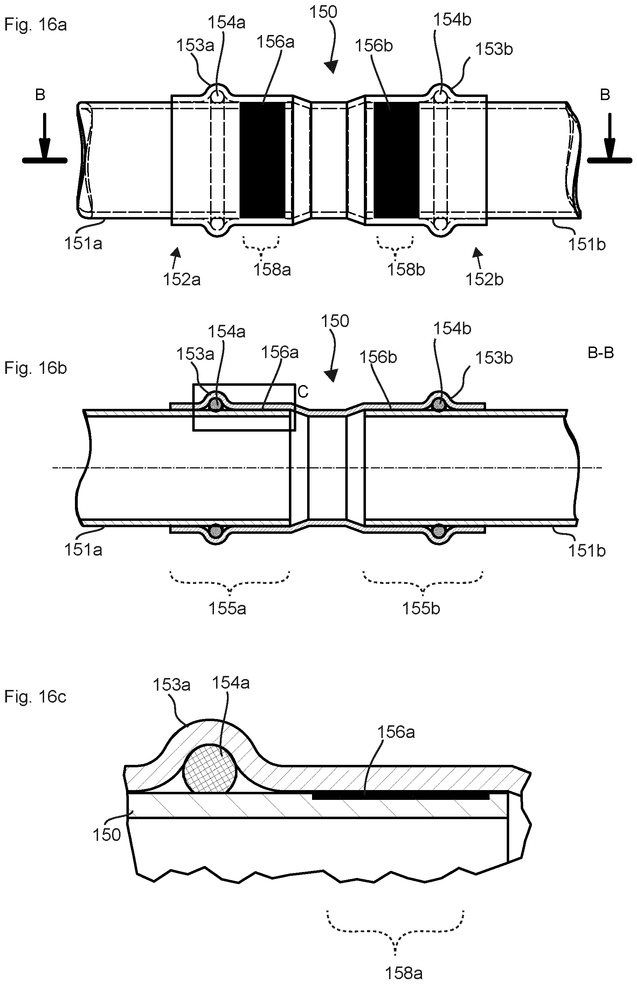

Die Figuren 16a, 16b und 16c zeigen eine 16. Ausführungsform der Erfindung.

Die Sicken 153a, 153b mit den jeweiligen Dichtmitteln 154a, 154b sind in herkömmlicher Weise an dem Verbindungsstück 150 in dessen Einschubbereichen 155a, 155b ausgebildet. In diesem Ausführungsbeispiel ist das intumeszierende Material 156a, 156b nicht am Verbindungsstück 150, sondern in Ausnehmungen an dem eingeschobenen Rohr 151a bzw. 151b platziert. Auch in dieser Gestaltung wird durch Zusammenwirken des Verbindungsstücks 150 und den eingeschobenen Rohren 151a bzw. 151b ein Verbindungssystem geschaffen, welches nach Herstellung der Pressverbindung das intumeszierende Material im Verbindungsbereich, genauer in den Abschnitten 158a und 158b zwischen den verbundenen Komponenten platziert. Die Ausnehmungen im eingeschobenen Rohr 151a, 151b können entsprechend den vorhergehenden Beschreibungen analog zu den Ausnehmungen im Verbindungsstück ausgebildet sein, also z.B. als Sicken, Nuten, Aufrauhungen oder sonstige Vertiefungen.

Soll ganz ohne Ausnehmungen gearbeitet werden, kann mit einem Sprüh- oder auch Flüssigauftrag des intumeszierenden Materials auf dem eingeschobenen Rohr eine entsprechende erfindungsgemäße Wirkung herbeigeführt werden.

Es wurde eine Anzahl von Ausführungsbeispielen gezeigt, die ein Verbindungsstück darstellen, in welches Rohrleitungsabschnitte einführbar sind. Die konkrete Gestaltung des Verbindungsstückes ist hier lediglich beispielhaft gezeigt, das Verbindungsstück kann auch gewinkelt, mit veränderlichen Durchmessern oder in sonstiger Weise ausgebildet sein, wobei es im Rahmen der Erfindung ausschließlich darauf ankommt, wie im Verbindungsbereich intumeszierendes Material in Ausnehmungen des Verbindungsstückes eingebracht ist.

## Patentansprüche

1. Verbindungsstück (5; 15; 25; 35; 45; 55; 65; 75; 85; 95; 105; 115; 125; 135; 140; 150) aus Metall für Rohrleitungen, wobei das Verbindungsstück wenigstens einen zylindrischen, rohrförmigen Aufnahmeabschnitt (2a, 2b; 12a, 12b; 92a, 92b; 105a; 115a; 125a; 135a; 145a, 145b; 155a, 155b ) aufweist, in den ein Rohrleitungsabschnitt (10, 11; 151a, 151b) einschiebbar ist,
wobei der Aufnahmeabschnitt (2a, 2b; 12a, 12b; 92a, 92b; 105a; 115a; 125a; 135a; 145a, 145b; 155a, 155b;) wenigstens teilweise als verformbarer Pressabschnitt ausgebildet ist,
wobei in dem Aufnahmeabschnitt auf der Innenseite des Verbindungsstücks wenigstens eine erste Sicke (3a, 3b; 13a, 13b; 93a, 93b; 106; 116; 126; 136; 143a, 143b; 153a, 153b) entlang eines inneren Umfangs des Verbindungsstücks ausgebildet ist,
wobei in die erste Sicke (3a, 3b; 13a, 13b; 93a, 93b; 106; 116; 126; 136; 143a, 143b; 153a, 153b) ein elastisches Dichtmittel (4a, 4b; 14a, 14b; 94a, 94b; 104; 114; 124; 134; 144a, 144b; 154a, 154b) eingebracht ist, welches die Sicke wenigstens teilweise ausfüllt,
**dadurch gekennzeichnet,**
**dass** an der Innenseite des Verbindungsstücks in dem Aufnahmeabschnitt (2a, 2b; 12a, 12b; 92a, 92b; 105a; 115a; 125a; 135a; 145a, 145b; 155a, 155b;) wenigstens abschnittsweise intumeszierendes Material (6a, 6b; 16a, 16b; 96a, 96b; 102; 113; 122; 132; 146a, 146b; 156a, 156b), insbesondere Blähgraphitmaterial angeordnet ist.

2. Verbindungsstück nach Anspruch 1, wobei das intumeszierende Material (6a, 6b; 16a, 16b; 96a, 96b; 102; 113; 122; 132) zumindest teilweise in Ausnehmungen in der Innenseite des Verbindungsstücks (5; 15; 25; 35; 45; 55; 65; 75; 85; 95; 105; 115; 125; 135) angeordnet ist.

3. Verbindungsstück nach Anspruch 2, wobei das intumeszierende Material (6a, 6b; 16a, 16b; 26a, 26b; 76a, 76b; 102; 113; 122; 132), insbesondere Blähgraphit wenigstens teilweise in Ausnehmungen angeordnet ist, welche durch die erste Sicke gebildet sind, in welche auch das Dichtmittel eingebracht ist.

4. Verbindungsstück nach Anspruch 3, wobei das intumeszierende Material, insbesondere Blähgraphit (26a) in der ersten Sicke (23a, 23b) zwischen Dichtmittel (24a, 24b) und Wandmaterial des Verbindungsstückes angeordnet ist.

5. Verbindungsstück nach Anspruch 2 oder 3, wobei ein Krallenring (101, 111, 121, 131) im Pressabschnitt (105b, 115b, 125b, 135b) an der Innenseite des Aufnahmeabschnitts (105a, 115a, 125a, 135a) angeordnet ist.

6. Verbindungsstück nach Anspruch 5, wobei das intumeszierende Material (102; 113; 122), insbesondere Blähgraphit angrenzend an den Krallenring oder innerhalb des Krallenrings angeordnet ist.

7. Verbindungsstück nach Anspruch 5 oder 6, wobei das intumeszierende Material (102; 113; 122; 132), insbesondere Blähgraphit und der Krallenring (101; 111; 121; 131) zusammen mit dem elastischen Dichtmittel in der ersten Sicke angeordnet sind.

8. Verbindungsstück nach einem der Ansprüche 2 bis 7, wobei ein Stützring neben dem elastischen Dichtmittel angeordnet ist, wobei der Stützring wenigstens teilweise aus intumeszierendem Material (113), insbesondere Blähgraphit besteht oder damit beschichtet ist.

9. Verbindungsstück nach einem der Ansprüche 2 bis 8 Ansprüche, wobei das intumeszierende Material (66a, 66b; 96a, 96b), insbesondere Blähgraphit wenigstens teilweise in Ausnehmungen angeordnet ist, welche durch eine zweite Sicke (67a, 67b; 97a, 97b) gebildet sind, welche in dem Verbindungsstück in axialer Richtung des Aufnahmeabschnitts versetzt ausgebildet ist.

10. Verbindungsstück nach Anspruch 9, wobei die erste und die zweite Sicke (73a, 77a, 73b, 77b) als benachbarte, ineinander übergehende Sicken zur Bildung einer Doppelsicke ausgebildet sind.

11. Verbindungsstück nach einem der Ansprüche 2 bis 10, wobei das intumeszierende Material, insbesondere Blähgraphit wenigstens teilweise als ringförmiger Körper in eine zugeordnete Ausnehmung eingesetzt ist.

12. Verbindungsstück nach einem der Ansprüche 2 bis 11, wobei das intumeszierende Material (36a, 36b), insbesondere Blähgraphit wenigstens teilweise als Folie in eine zugeordnete Ausnehmung eingesetzt ist.

13. Verbindungsstück nach einem der Ansprüche 2 bis 12 vorangehenden Ansprüche, wobei das intumeszierende Material (86a, 86b), insbesondere Blähgraphit wenigstens teilweise in Ausnehmungen angeordnet ist, welche durch eine Profilierung und/oder Aufrauhung der Innenseite des Verbindungsstückes im Aufnahmeabschnitt gebildet sind.

14. Verbindungsstück nach einem der vorangehenden Ansprüche, wobei das intumeszierende Material (146a, 146b), insbesondere Blähgraphit wenigstens teilweise als Sprühauftrag oder Streichauftrag, insbesondere als Lack an dem Verbindungsstück angeordnet ist.

15. Verbindungsstück nach einem der vorangehenden Ansprüche, wobei das intumeszierende Material (96a, 96b), insbesondere Blähgraphit wenigstens teilweise im endseitig an den Aufnahmeabschnitt angrenzenden Bereich des Verbindungsstückes angeordnet ist, so dass bei Einschub eines Rohrleitungsabschnitt das intumeszierende Material an eine Endseite des eingeschobenen Rohrleitungsabschnitts angrenzt.

16. Verbindungssystem aus Metall für Rohrleitungen, mit einem Verbindungsstück gemäß einem der Ansprüche 1 bis 15,
mit einem Rohrleitungsabschnitt, der in den rohrförmigen Aufnahmeabschnitt einschiebbar ist.

17. Verbindungssystem aus Metall für Rohrleitungen, mit einem Verbindungsstück (150), welches wenigstens einen zylindrischen, rohrförmigen Aufnahmeabschnitt aufweist,
mit einem Rohrleitungsabschnitt (151a, 151b), der in den rohrförmigen Aufnahmeabschnitt einschiebbar ist,
wobei der Aufnahmeabschnitt wenigstens teilweise als verformbarer Pressabschnitt ausgebildet ist,
wobei in dem Aufnahmeabschnitt auf der Innenseite des Verbindungsstücks wenigstens eine erste Sicke (153a, 153b) entlang eines inneren Umfangs des Verbindungsstücks (150) ausgebildet ist,
wobei in die erste Sicke ein elastisches Dichtmittel (154a, 154b) eingebracht ist, welches die erste Sicke wenigstens teilweise ausfüllt,
**dadurch gekennzeichnet,**
**dass** an der Außenseite des Rohrleitungsabschnitts (151a, 151b) in dem Bereich, welcher in den Aufnahmeabschnitt einschiebbar ist, wenigstens abschnittsweise intumeszierendes Material (156a, 156b), insbesondere Blähgraphitmaterial angeordnet ist.

18. Verbindungssystem nach Anspruch 17, wobei das intumeszierende Material auf den Rohrleitungsabschnitt als Sprühauftrag oder als Streichauftrag, insbesondere als Lack angeordnet ist.

19. Verbindungssystem nach Anspruch 17, wobei das intumenszierende Material (156a, 156b) auf den Rohrleitungsabschnitt in wenigstens einer Ausnehmung angeordnet ist, welche an der Außenseite des Rohrleitungsabschnitts ausgebildet ist.

## Claims

1. Connecting piece (5; 15; 25; 35; 45; 55; 65; 75; 85; 95; 105; 115; 125; 135; 140; 150) made of metal for pipelines, the connecting piece having at least one cylindrical, tubular receiving section (2a, 2b; 12a, 12b; 92a, 92b; 105a; 115a; 125a; 135a; 145a, 145b; 155a, 155b;) into which a pipeline section (10, 11; 151a, 151b) can be inserted,
wherein the receiving section (2a, 2b; 12a, 12b; 92a, 92b; 105a; 115a; 125a; 135a; 145a, 145b; 155a, 155b;) is formed at least partially as a deformable pressing section,
wherein at least one first groove (3a, 3b; 13a, 13b; 93a, 93b; 106; 116; 126; 136; 143a, 143b; 153a, 153b) is formed in the receiving section on the inside of the connecting piece along an inner circumference of the connecting piece,
wherein an elastic sealing means (4a, 4b; 14a, 14b; 94a, 94b; 104; 114; 124; 134; 144a, 144b; 154a, 154b) is inserted into the first groove (3a, 3b; 13a, 13b; 93a, 93b; 106; 116; 126; 136; 143a, 143b; 153a, 153b), which at least partially fills the groove,
**characterised in**
**in that** intumescent material (6a, 6b; 16a, 16b; 96a, 96b; 102; 113; 122; 132; 146a, 146b; 156a, 156b), in particular expandable graphite material, is arranged at least in areas on the inside of the connecting piece in the receiving section (2a, 2b; 12a, 12b; 92a, 92b; 105a; 115a; 125a; 135a; 145a, 145b; 155a, 155b;).

2. Connecting piece according to claim 1, wherein the intumescent material (6a, 6b; 16a, 16b; 96a, 96b; 102; 113; 122; 132) is arranged at least partially in recesses in the inside of the connecting piece (5; 15; 25; 35; 45; 55; 65; 75; 85; 95; 105; 115; 125; 135).

3. Connecting piece according to claim 2, wherein the intumescent material (6a, 6b; 16a, 16b; 26a, 26b; 76a, 76b; 102; 113; 122; 132), in particular expandable graphite, is inserted at least partially in recesses which are formed by the first groove into which the sealant is also arranged.

4. Connecting piece according to claim 3, wherein the intumescent material, in particular expandable graphite (26a), is arranged in the first groove (23a, 23b) between the sealant (24a, 24b) and the wall material of the connecting piece.

5. Connecting piece according to claim 2 or 3, wherein a claw ring (101, 111, 121, 131) is arranged in the pressing section (105b, 115b, 125b, 135b) on the inside of the receiving section (105a, 115a, 125a, 135a).

6. Connecting piece according to claim 5, wherein the intumescent material (102; 113; 122), in particular expandable graphite, is arranged adjacent to the claw ring or inside the claw ring.

7. Connecting piece according to claim 5 or 6, wherein the intumescent material (102; 113; 122; 132), in particular expandable graphite, and the claw ring (101; 111; 121; 131) are arranged together with the elastic sealant in the first groove.

8. Connecting piece according to one of claims 2 to 7, wherein a support ring is arranged next to the elastic sealing means, wherein the support ring consists at least partly of intumescent material (113), in particular expandable graphite, or is coated therewith.

9. Connecting piece according to one of claims 2 to 8, wherein the intumescent material (66a, 66b; 96a, 96b), in particular expandable graphite, is at least partially arranged in recesses which are formed by a second groove (67a, 67b; 97a, 97b) which is formed in the connecting piece offset in the axial direction of the receiving section.

10. Connecting piece according to claim 9, wherein the first and second grooves (73a, 77a, 73b, 77b) are formed as neighbouring grooves merging into one another to form a double groove.

11. Connecting piece according to one of claims 2 to 10, wherein the intumescent material, in particular expandable graphite, is at least partially inserted as an annular body into an associated recess.

12. Connecting piece according to one of claims 2 to 11, wherein the intumescent material (36a, 36b), in particular expandable graphite, is at least partially inserted as a foil into an associated recess.

13. Connecting piece according to one of the preceding claims 2 to 12, wherein the intumescent material (86a, 86b), in particular expandable graphite, is at least partially arranged in recesses which are formed by profiling and/or roughening the inside of the connecting piece in the receiving section.

14. Connecting piece according to one of the preceding claims, wherein the intumescent material (146a, 146b), in particular expandable graphite, is arranged at least partially as a spray application or brush application, in particular as a lacquer on the connecting piece.

15. Connecting piece according to one of the preceding claims, wherein the intumescent material (96a, 96b), in particular expandable graphite, is arranged at least partially in the region of the connecting piece adjoining the receiving section on the end side, so that when a pipe section is inserted, the intumescent material adjoins an end side of the inserted pipe section.

16. Metal connection system for pipelines, with a connecting piece according to one of claims 1 to 15,
with a pipe section which can be inserted into the tubular receiving section.

17. Connecting system made of metal for pipelines, having a connecting piece (150) which has at least one cylindrical, tubular receiving section,
with a pipe section (151a, 151b) which can be pushed into the tubular receiving section,
wherein the receiving section is at least partially formed as a deformable pressing section,
wherein at least one first groove (153a, 153b) is formed in the receiving section on the inside of the connecting piece along an inner circumference of the connecting piece (150),
wherein an elastic sealing means (154a, 154b) is arranged in the first groove, which at least partially fills the first groove,
**characterised in**
**in that** intumescent material (156a, 156b), in particular expandable graphite material, is arranged at least in sections on the outside of the pipe section (151a, 151b) in the region which can be pushed into the receiving section.

18. Connection system according to claim 17, wherein the intumescent material is arranged on the pipe section as a spray application or as a brush application, in particular as a lacquer.

19. Connection system according to claim 17, wherein the intumescent material (156a, 156b) is arranged on the pipe section in at least one recess which is formed on the outside of the pipe section.

## Revendications

1. Pièce de raccordement (5; 15; 25; 35; 45; 55; 65; 75; 85; 95; 105; 115; 125; 135; 140; 150) en métal pour des conduites tubulaires, la pièce de raccordement présentant au moins une section de réception (2a, 2b; 12a, 12b; **...;** 92a, 92b; 105a; 115a; 125a; 135a; 145a, 145b; 155a, 155b) cylindrique et tubulaire, dans laquelle une section de conduite tubulaire (10, 11; 151a, 151b) peut être insérée,
la section de réception (2a, 2b; 12a, 12b; **...;** 92a, 92b; 105a; 115a; 125a; 135a; 145a, 145b; 155a, 155b) étant réalisée au moins partiellement sous forme de section de compression déformable,
dans lequel au moins une première moulure (3a, 3b; 13a, 13b; ...; 93a, 93b; 106; 116; 126; 136; 143a, 143b; 153a, 153b) est formée dans la partie de réception sur le côté intérieur de la pièce de raccordement le long d'une circonférence intérieure de la pièce de raccordement,
un moyen d'étanchéité élastique (4a, 4b; 14a, 14b; **...;** 94a, 94b; 104; 114; 124; 134; 144a, 144b; 154a, 154b) étant inséré dans la première moulure (3a, 3b; 13a, 13b; **...;** 93a, 93b; 106; 116; 126; 136; 143a, 143b; 153a, 153b), lequel remplit au moins partiellement la moulure,
**caractérisé en ce que**
un matériau intumescent (6a, 6b; 16a, 16b; **...;** 96a, 96b; 102; 113; 122; 132; 146a, 146b; 156a, 156b), en particulier un matériau en graphite expansé, est disposé sur le côté intérieur de la pièce de raccordement dans la section de réception (2a, 2b; 12a, 12b; ...; 92a, 92b; 105a; 115a; 125a; 135a; 145a, 145b; 155a, 155b).

2. Pièce de raccordement selon la revendication 1, dans laquelle le matériau intumescent (6a, 6b; 16a, 16b; **...;** 96a, 96b; 102; 113; 122; 132) est disposé au moins partiellement dans des évidements dans la face interne de la pièce de raccordement (5; 15; 25; 35; 45; 55; 65; 75; 85; 95; 105; 115; 125; 135).

3. Pièce de raccordement selon la revendication 2, dans laquelle le matériau intumescent (6a, 6b; 16a, 16b; 26a, 26b; 76a, 76b; 102; 113; 122; 132), en particulier le graphite expansé, est disposé au moins en partie dans des évidements formés par la première moulure, dans laquelle est également inséré l'agent d'étanchéité.

4. Pièce de raccordement selon la revendication 3, dans laquelle le matériau intumescent, en particulier le graphite expansé (26a), est disposé dans la première moulure (23a, 23b) entre le moyen d'étanchéité (24a, 24b) et le matériau de paroi de la pièce de raccordement.

5. Pièce de raccordement selon la revendication 2 ou 3, dans laquelle une bague à griffes (101, 111, 121, 131) est disposée dans la partie de compression (105b, 115b, 125b, 135b) à l'intérieur de la partie de réception (105a, 115a, 125a, 135a).

6. Pièce de raccordement selon la revendication 5, dans laquelle le matériau intumescent (102, 113, 122), en particulier le graphite expansé, est disposé de manière adjacente à l'anneau de griffe ou à l'intérieur de l'anneau de griffe.

7. Pièce de raccordement selon la revendication 5 ou 6, dans laquelle le matériau intumescent (102, 113, 122, 132), en particulier le graphite expansé, et l'anneau à griffes (101, 111, 121, 131) sont disposés conjointement avec le moyen d'étanchéité élastique dans la première moulure.

8. Pièce de raccordement selon l'une quelconque des revendications 2 à 7, dans laquelle une bague de support est disposée à côté du moyen d'étanchéité élastique, la bague de support étant au moins partiellement constituée ou revêtue d'un matériau intumescent (113), notamment de graphite expansé.

9. Pièce de raccordement selon l'une quelconque des revendications 2 à 8, dans laquelle le matériau intumescent (66a, 66b; 96a, 96b), notamment le graphite expansé, est au moins partiellement disposé dans des évidements formés par une deuxième moulure (67a, 67b; 97a, 97b) formée dans la pièce de raccordement de manière décalée dans la direction axiale de la portion de réception.

10. Pièce de raccordement selon la revendication 9, dans laquelle la première et la deuxième moulures (73a, 77a, 73b, 77b) sont réalisées sous la forme de moulures adjacentes qui se fondent l'une dans l'autre pour former une double moulure.

11. Pièce de raccordement selon l'une des revendications 2 à 10, dans laquelle le matériau intumescent, en particulier le graphite expansé, est inséré au moins partiellement sous forme de corps annulaire dans un évidement associé.

12. Pièce de raccordement selon l'une des revendications 2 à 11, dans laquelle le matériau intumescent (36a, 36b), en particulier le graphite expansé, est inséré au moins partiellement sous forme de feuille dans un évidement associé.

13. Pièce de raccordement selon l'une quelconque des revendications précédentes 2 à 12, dans laquelle le matériau intumescent (86a, 86b), notamment le graphite expansé, est au moins partiellement disposé dans des évidements formés par un profilage et/ou une rugosité de la face interne de la pièce de raccordement dans la portion de réception.

14. Pièce de raccordement selon l'une des revendications précédentes, dans laquelle le matériau intumescent (146a, 146b), en particulier le graphite expansé, est disposé au moins en partie sur la pièce de raccordement sous forme d'une application par pulvérisation ou par enduction, en particulier sous forme de vernis.

15. Pièce de raccordement selon l'une des revendications précédentes, dans laquelle le matériau intumescent (96a, 96b), en particulier le graphite expansé, est disposé au moins partiellement dans la zone de la pièce de raccordement adjacente à l'extrémité de la section de réception, de sorte que, lors de l'insertion d'une section de tuyauterie, le matériau intumescent est adjacent à une face d'extrémité de la section de tuyauterie insérée.

16. Système de raccordement métallique pour tuyauterie, comprenant une pièce de raccordement selon l'une quelconque des revendications 1 à 15,
avec une section de tuyauterie qui peut être insérée dans la section de réception tubulaire.

17. Système de raccordement métallique pour tuyauteries, comprenant une pièce de raccordement (150) qui présente au moins une section de réception tubulaire cylindrique,
avec une section de tuyauterie (151a, 151b) qui peut être insérée dans la section de réception tubulaire,
la section de réception étant conçue au moins partiellement comme une section de compression déformable,
dans lequel au moins une première moulure (153a, 153b) est formée dans la section de réception sur le côté intérieur de la pièce de raccordement le long d'une circonférence intérieure de la pièce de raccordement (150),
dans lequel un moyen d'étanchéité élastique (154a, 154b) est inséré dans la première moulure, lequel remplit au moins partiellement la première moulure,
**caractérisé en ce que**
un matériau intumescent (156a, 156b), en particulier un matériau en graphite expansé, est disposé au moins par sections sur le côté extérieur du tronçon de tuyauterie (151a, 151b) dans la zone qui peut être insérée dans le tronçon de réception.

18. Système de raccordement selon la revendication 17, dans lequel le matériau intumescent est disposé sur la section de conduite sous forme d'application par pulvérisation ou d'application au pinceau, en particulier sous forme de vernis.

19. Système de raccordement selon la revendication 17, dans lequel le matériau intumescent (156a, 156b) est disposé sur la section de tuyauterie dans au moins un évidement formé sur l'extérieur de la section de tuyauterie.
